# EUROPEAN PATENT APPLICATION

(11) **EP 3 446 959 A1**
(43) Date of publication of application: **27.02.2019**
(21) Application number: 17020453.1
(22) Date of filing: 04.10.2017
(51) Int. Cl.: B63H 5/125, B63H 1/10

(54) **RETRACTABLE VERTICAL-AXIS PROPELLER DEVICE**

(30) Priority: 22.08.2017 TR 201712482
(71) Applicant: Ülgen, Mehmet, Nevres, 34394 Istanbul (TR)
(72) Inventor: Ülgen, Mehmet, Nevres, 34394 Istanbul (TR)

(57) **Abstract**

A device for optional activation of a vertical-axis propeller (10) to be configured on the lower surface of a marine vessel, said device comprises a vertical-axis propeller; a sliding means (31, 32, 33, 34) associated with the lower surface of the marine vessel and sliding the vertical-axis propeller; at least one slider (51) that is associated with the vertical-axis propeller and is in sliding relation with the sliding means; and at least one driving means (71, 74, 75) for driving the vertical-axis propeller in upwards and downwards in the sliding direction.

## Description

### TECHNICAL FIELD

The present invention relates to a collapsible device for a retractable or optionally activated vertical-axis (cycloidal) propeller being suitable for use in various vessels, in particular motor yachts.

### BACKGROUND OF INVENTION

In respect to direction of montage on a marine vessel, propellers can mainly be categorized into two groups, those with horizontal-axis (along the fore-aft direction) and those with vertical axis. Blades on vertical-axis propellers, also known as vertical-axis (cycloidal) propellers, make a full rotation around the rotation axis while they rotate partially around their own axes. By virtue of this property, vertical axis propellers provide many functional advantages compared to conventional horizontal-axis propellers. For example, a marine vessel thrusted with a vertical-axis propeller has a 360-degree maneuvering capacity during normal cruising. On the other hand, it is possible to carry out a smooth parallel docking to the landing place. It also provides stabilization against vessel rolling. They increase user comfort due to low noise levels and enable the vessel to be held in position on water and at the desired angle without anchoring.

However, it is difficult to have some of the above mentioned properties in vessels with horizontal-axis propeller while some are impossible. For example, stabilization against rolling of a vessel with a horizontal-axis propeller can only be achieved with gyro-devices. Similarly, it is not possible to prevent vessel from going adrift without anchoring.

On the other hand, when vertical-axis propellers are designed to meet the necessary thrust required for the desired accelerated or normal cruising of the vessel, they are relatively costly and their size generally are increased.

### BRIEF DESCRIPTION OF INVENTION

It is an object of the present invention to improve characteristics of a marine vessel with a horizontal drive propeller resulting from its interaction with water in a cost-effective manner.

To achieve this object, the present invention relates to a device for optionally activating a vertical-axis propeller to be configured on a lower surface of a marine vessel, characterized by comprising a vertical-axis propeller; a sliding means associated with the lower surface of the marine vessel and sliding the vertical-axis propeller; at least one slider communicated with the vertical-axis propeller and being in sliding relation with the sliding means; and at least one driving means for driving the vertical-axis propeller upwards and downwards in the sliding direction.

According to an embodiment of the invention, the device according to the invention comprises a cover mounted on the bottom side of the sliding means, which can be opened/closed through its communication with the vertical-axis propeller. The lower surface of the said cover has a form compatible with the lower surface of the marine vessel.

Another aspect of the invention relates to a marine vessel, preferably a motor yacht or boat, equipped with a horizontal propeller, the marine vessel comprises the abovementioned device according to the invention.

### BRIEF DESCRIPTION OF THE DRAWINGS

For a better understanding of the configuration and advantages of the present invention, along with its auxiliary elements, it should be evaluated with reference to the accompanying drawings, wherein:

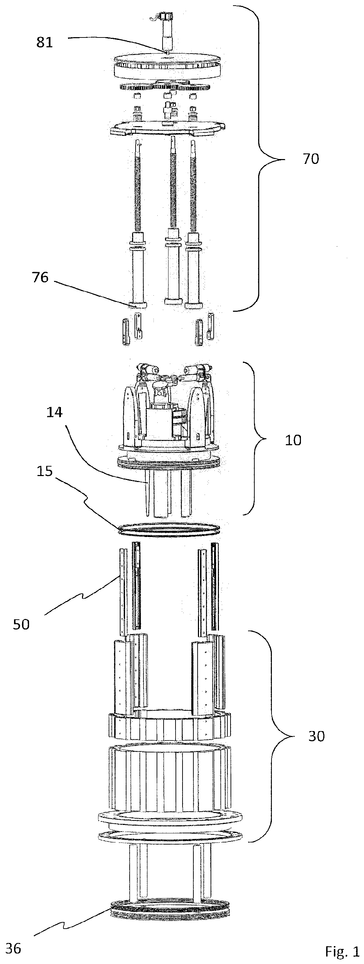

Figure 1 is an exploded top perspective view of a device according to the present invention.

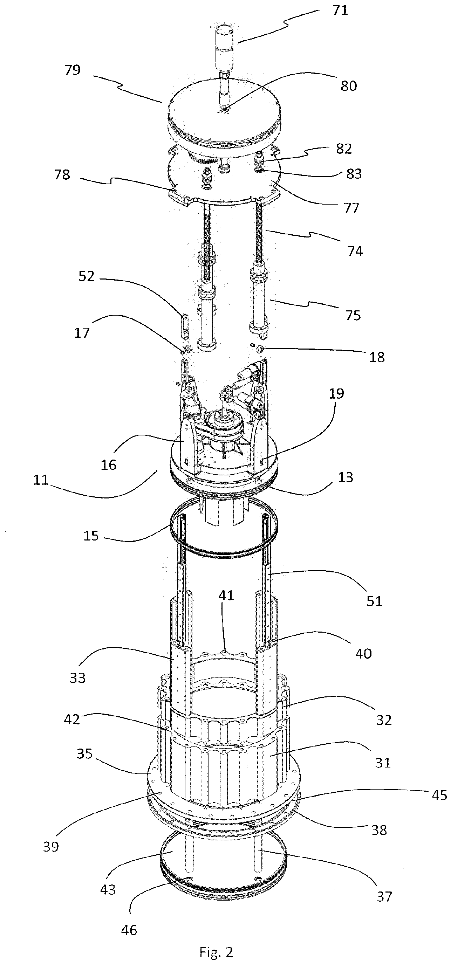

Figure 2 is an exploded top perspective view of the device according to the present invention.

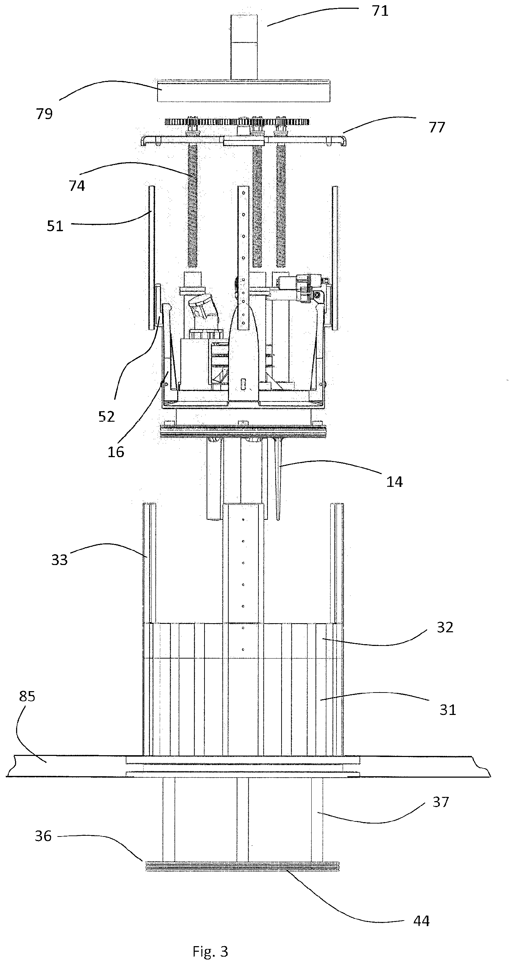

Figure 3 is a side view of the device according to the present invention in a demounted state.
Figure 4 is a side view of the device according to the present invention in an assembled state, with the lower cover being in an opened position.

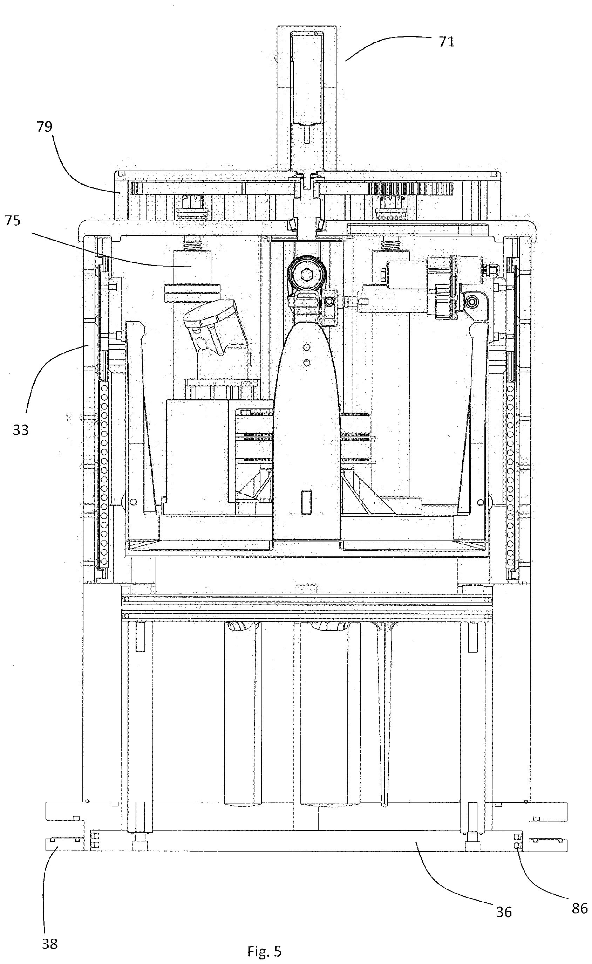

Figure 5 is a side view of the device according to the present invention in an assembled state, with the lower cover being in a closed position.

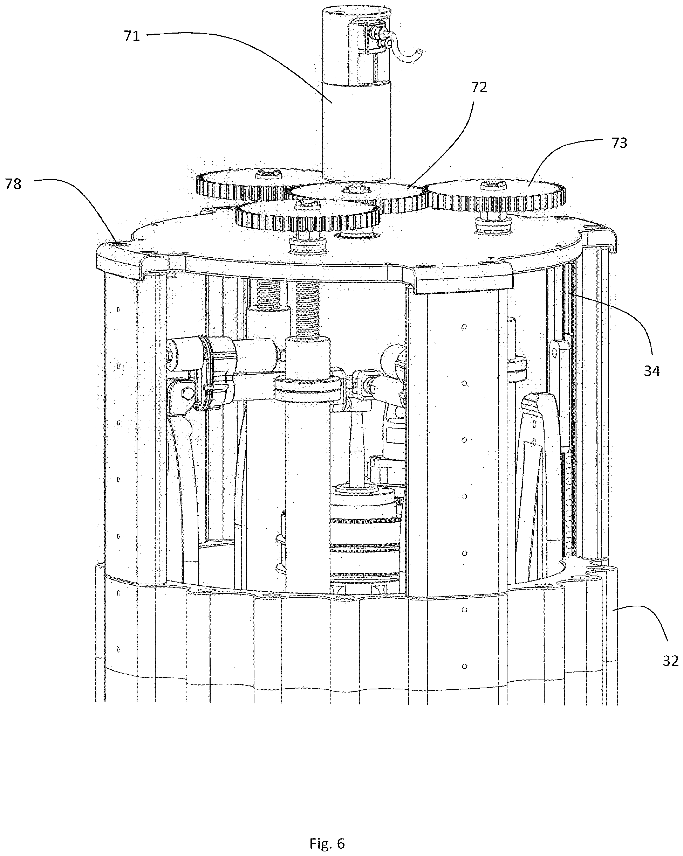

Figure 6 is a top perspective view of the device according to the present invention, with its upper portion being in an assembled state.

### REFERENCE NUMBERS OF THE PARTS IN THE DRAWINGS

- 10: Vertical-axis propeller
- 11: Propeller hub
- 12: Upper surface of hub
- 13: Propeller gasket hole
- 14: Propeller blade
- 15: Propeller gasket
- 16: Coupling support
- 17: Pin
- 18: Roller
- 19: Roller opening
- 20: Propeller hub slot
- 30: Sliding housing
- 31: Sliding lower housing
- 32: Sliding upper housing
- 33: Sliding rail
- 34: Sliding groove
- 35: Upper flange
- 36: Lower cover
- 37: Lower cover coupling bar
- 38: Lower flange
- 39: Upper flange hole
- 40: Sliding rail hole
- 41: Upper housing hole
- 42: Lower housing hole
- 43: Upper surface of the lower cover
- 44: Lower surface of the lower cover
- 45: Lower flange hole
- 46: Coupling rod hole
- 47: Upper bolt of the coupling rod
- 48: Lower bolt of the coupling rod
- 50: Slider
- 51: Slider rail
- 52: Slider bracket
- 70: Driving unit
- 71: Motor
- 72: Drive gear
- 73: Transmission gear
- 74: Screw shaft
- 75: Driving rod
- 76: Coupling flange
- 77: Coupling plate
- 78: Coupling plate hole
- 79: Top cover
- 80: Cover hole
- 81: Motor shaft
- 82: Pivot bearing
- 83: Bearing hole
- 85: Lower portion of the marine vessel
- 86: Lower cover gasket

### DETAILED DESCRIPTION OF INVENTION

The device according to the invention comprises in general a vertical-axis propeller (10) as known in the art, a sliding housing (30) fixed to an opening in the lower portion of the marine vessel, a slider (50) that is slid into the said sliding housing (30) and associated with the vertical-axis propeller (10), and a driving means (70) for driving the vertical-axis propeller (10) in a linear direction along its axis.

As known from the art, the vertical-axis propeller (10) comprises a propeller hub (11), a plurality of propeller blades (14) extending downwards from its lower surface vertically and a plurality of coupling supports (16) extending upwards from the upper surface (12) or periphery of the propeller hub (11). The propeller gasket holes (13) are provided around the cylindrical propeller hub (11) for accommodating a plurality of circular propeller gaskets (15). Since the vertical-axis propeller (10) is known in the art, the driving motor and mechanisms driving the propeller blades are not disclosed herein.

The vertical-axis propeller (10) is disposed within a sliding housing (30) in cylindrical form, surrounded cylindrically from the outside, and the vertical axis-propeller (10) can be moved back and forth (up and down in the drawings) in an axial direction within this sliding housing (30), as will be explained below.

The sliding housing (30) preferably comprises of a circular sliding lower housing (31) and a circular sliding upper housing (32) for ease of assembly and these are connected to each other with fasteners such as bolts that are passed through the upper housing holes (41) and the lower housing holes (42) that are opened at the periphery. A plurality of sliding rails (33) (four of them are shown in the drawings) extending vertically upward from the upper side of the sliding upper housing (32) are secured. The sliding grooves (34) which are extending longitudinally are formed in each sliding rail (33) on their sides facing to the center.

On the lower side of the sliding lower housing (31), an upper flange (35) preferably having a diameter greater than that of this housing, and a lower flange (38) beneath and in axial distance thereto are provided. Said upper flange (35) and lower flange (38) include, respectively, a plurality of annular upper flange holes (39) and lower flange holes (45). Flanges are suggested for mounting the device according to the invention on the lower portion of the marine vessel. Therefore, the lower surface of the upper flange (35) is positioned on the upper surface of the lower portion of the marine vessel and the upper surface of the lower flange (38) is placed on the lower surface of the lower portion of the marine vessel lower portion and they are assembled to the marine vessel through fasteners such as bolts.

A driving unit (70) is provided on the upper side of the device. Preferably, a hydraulic or electrical motor (71) is provided on the uppermost portion of driving unit (70). The motor shaft (81) is connected to a drive gear (72) and the drive gear (72) transmits motion to a plurality of transmission gears (73) (three of them are shown in the drawings). Screw shafts (74) extending downwards from the center of each transmission gear (73) are provided. Each screw shaft (74) is associated with a driving rod (75) threaded along its axis to cooperate with the screws of such screw shafts. Said screw shafts (74) are rotated as the motor (71) is rotated in a direction (e.g. in clockwise direction) and thus, the driving rods (75) can move forward in axial direction. Similarly, when the motor is rotated in the other direction (counter-clockwise direction), the driving rods (75) can move backward in axial direction.

Each driving rod (75) is connected to the hub's upper surface (12) through one coupling flange (76) provided on their lower ends. Driving gear (72) and transmission gears (73) are closed by means of a top cover (79) at their upper sides. A cover hole (80) is provided at the center of the top cover (79) for inserting the motor shaft. A coupling plate (77) is provided on the lower side of top cover (79) and screw shafts (74) are mounted into bearing holes (83) formed on the coupling plate (77) through the pivot bearings (82). Plate holes (78) are formed around the coupling plate (77), and after the sliding rail holes (40) located on the upper portions of the sliding rails (33) are aligned with the plate holes (78), the sliding rails (33) are coupled to the coupling plate (77) through fasteners such as bolts.

A slider bracket (52) is fixed to the outside of each coupling support (16) of the vertical-axis propeller, and on their external sides, a sliding rail (51) extending vertically is provided. Each slider rail (51) is mounted such that it is movable in longitudinal direction in each sliding rail groove (34). Thus, as the vertical-axis propeller (10) is moved linearly in axial direction with the drive from the motor (71), it is slid by means of the sliding rail (33) and the slider rail (51). It comprises a roller opening (19) formed on the lower side of each coupling support (16) and facing the outer surface thereof. A roller (18) is attached to each opening by means of a pin (17). Each roller (18) protrudes outwards from the exterior surface of the support (16) to which it is attached. This protruding portion of the roller is bedded by grooves formed on the inner surface of the sliding lower housing (31) during the sliding.

A skilled person in the art will appreciate that a driving unit, comprising of a hydraulic piston mechanism, may be used instead of a driving unit consisting of the abovementioned gears. In this case, the piston arm may be associated with hub's upper surface (12) and as the piston moves forward, the vertical-axis propeller moves downwards (similarly, as the piston moves backwards, the vertical-axis propeller moves upwards).

According to a preferred embodiment of the invention, a circular-shaped lower cover (36) is disposed on the bottom side of device. Coupling rod holes (46) are formed on the upper surface of the lower cover (43) and lower cover coupling rods (37) extending upwards from the upper surface of the lower cover (43) are inserted into these holes by means of coupling rod lower bolts (48). The upper ends of the lower cover coupling rods (37) are associated with propeller hub (11) by means of coupling rod upper bolts (47). Thus, when the vertical-axis propeller (10) moves forward (downwards in the drawings), the lower cover (36) is opened and similarly, when the vertical-axis propeller (10) moves backward (upwards in the drawings), the lower cover (36) is closed and is inserted into a slot (20) formed on the lower portion of the propeller hub (11). Propeller gasket grooves are provided around the lower cover (36) for accommodating a plurality of lower cover gaskets (86).

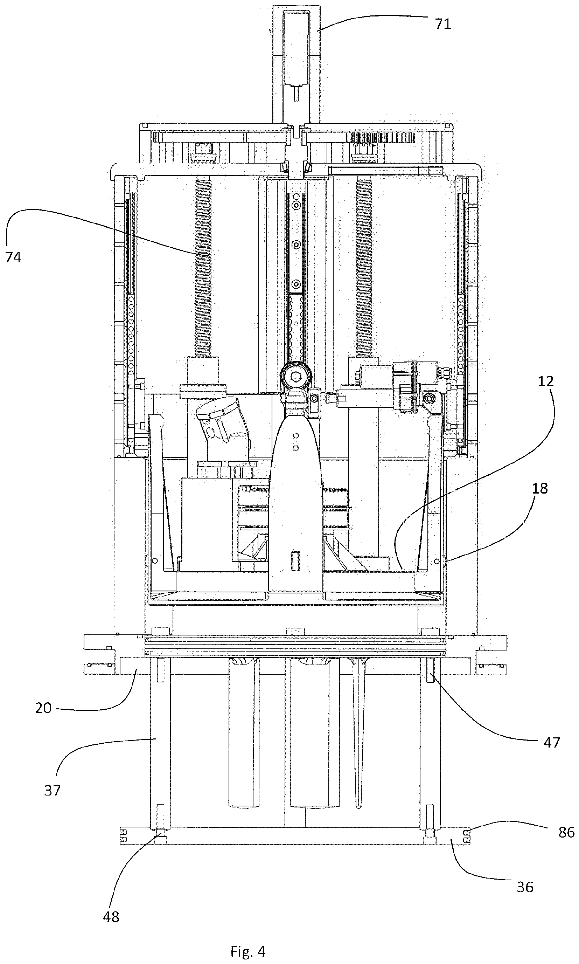

As shown in Figure 4, when the lower cover (36) is fully opened, the vertical-axis propeller blades (14) are positioned between the lower cover (36) and the lower flange (38), in which case the vertical-axis propeller (10) is ready to operate. The lower surface of the lower cover (44) has a form compatible with the lower portion of marine vessel (85). Thus, when the lower cover (36) is closed, a continuous surface form is created on the lower surface of the marine vessel.

The device according to the invention is especially suitable for use in marine vessels at various sizes already equipped with a horizontal propeller. In this case, the horizontal-axis propeller may be deactivated and the vertical-axis propeller may be activated for parallel docking of the marine vessel to the landing place. Similarly, only the vertical-axis propeller may be activated for smooth/noiseless cruising. When the marine vessel reaches to relatively high speeds, e.g. 20 mph or higher, the vertical-axis propeller may be retracted. Further, when it is used in a marine vessel, it may comprise two (or multiples of two) devices arranged symmetrically according to keel.

## Claims

1. A device for optionally activating a vertical-axis propeller to be configured on a lower surface of a marine vessel, **characterized by** comprising a vertical-axis propeller; a sliding means communicating with the lower surface of the marine vessel and sliding the vertical-axis propeller; at least one slider communicating with the vertical-axis propeller and being in sliding relation with the sliding means; and at least one driving means for driving the vertical-axis propeller upwards and downwards in the sliding direction.

2. A device according to claim 1, **characterized in that** said sliding means comprises at least one sliding rail having a sliding groove.

3. A device according to claim 2, **characterized in that** the at least one slider is moved in the corresponding sliding groove.

4. A device according to claim 1, **characterized in that** the driving means comprises a motor, a driving gear associated with the motor, a plurality of transmission gears that are associated with the driving gear, screw shafts extending from the center of the transmission gears, and driving rods which are threaded along their axis to cooperate with the screws of the screw shafts and which are associated with the vertical-axis propeller.

5. A device according to claim 1, **characterized in that** the vertical-axis propeller comprises a plurality of coupling supports extending upwards from the hub and a slider rail extending vertically on the external side of each coupling support.

6. A device according to claim 5, **characterized by** comprising a roller (18) arranged on the lower side of each coupling support (16) and facing to the outer surface thereof.

7. A device according to claim 1, **characterized by** comprising at least one propeller gasket hole formed around the vertical-axis propeller hub for accommodating a circular-shaped propeller gasket.

8. A device according to claim 1, **characterized by** comprising a lower cover arranged on the lower side of the sliding means and the lower cover being able to be opened/closed in communication with the vertical-axis propeller.

9. A device according to claim 8, **characterized by** comprising at least one cover gasket (86) provided around the lower cover (36).

10. A marine vessel fitted with a horizontal propeller, **characterized by** comprising a device according to any one of claims 1-9.
